# FASCICULE DE BREVET EUROPEEN

(11) **EP 1 759 100 B1**
(45) Date de publication et mention de la délivrance du brevet: **17.12.2008**
(21) Numéro de dépôt: 05776446.6
(22) Date de dépôt: 15.06.2005
(51) Int. Cl.: F01N 9/00, F01N 3/023, F02D 41/02

(54) **PROCEDE DE CONTROLE DE LA REGENERATION D'UN FILTRE A PARTICULES**
VERFAHREN ZUR STEUERUNG DER REGENERATION EINES PARTIKELFILTERS
CONTROL METHOD FOR PARTICULATE FILTER REGENERATION

(30) Priorité: 15.06.2004 FR 0451175
(43) Date de publication de la demande: 07.03.2007
(73) Titulaire: RENAULT S.A.S., 92100 Boulogne Billancourt (FR)
(72) Inventeur: DANEAU, Marc, F-92100 BOULOGNE BILLANCOURT (FR); GODON, Fabien, F-94400 VITRY SUR SEINE (FR); PILLOT, Adrien, F-92500 RUEIL-MALMAISON (FR)
(86) Numéro de dépôt international: PCT/FR2005/050446
(87) Numéro de publication internationale: WO 2006/003339

(56) Documents cités:
- EP-A- 1 426 591
- DE-C1- 10 033 158
- FR-A- 2 836 957
- US-A- 5 044 158
- US-A1- 2004 074 225
- PATENT ABSTRACTS OF JAPAN vol. 009, no. 235 (M-415), 21 septembre 1985 (1985-09-21) & JP 60 090914 A (MITSUBISHI JIDOSHA KOGYO KK), 22 mai 1985 (1985-05-22)

## Description

L'invention se rapporte au domaine des moteurs à combustion interne, et plus précisément celui des moteurs Diesel. Elle concerne les moteurs Diesel équipés d'un filtre à particules et plus particulièrement cette entité, tout en prenant en compte son adéquation avec le fonctionnement du moteur.

L'invention repose sur un besoin d'optimiser le fonctionnement d'un filtre à particules, notamment lors de sa régénération. Cette efficacité est recherchée pour pouvoir espacer les régénérations, et limiter la dilution du gasoil dans l'huile.

Selon l'état de la technique connue, le contrôle de la régénération des filtres à particules est assuré par un pilotage, soit de la température en entrée du filtre à particules, à partir de stratégies d'injection appropriées, soit du taux d'oxygène dans les gaz d'échappement, en limitant le débit d'air admis dans le moteur par un volet situé dans la ligne d'admission du moteur, ou la recirculation d'une partie des gaz brûlés.

Le contrôle de la température en entrée ou en sortie du filtre, est toujours associé à l'une de ces deux régulations, afin de prévenir une élévation de température trop importante dans le filtre, qui pourrait engendrer sa destruction.

Lorsque la régénération du filtre est générée par le pilotage de l'injection du gasoil dans le cylindre, les stratégies d'injection correspondantes entraînent une augmentation de la consommation en carburant et la dilution d'une partie du gasoil dans l'huile, qui peut être fatale pour le moteur, lorsqu'elle dépasse un certain seuil. Il est donc souhaitable de limiter cette dilution.

Toutefois, les stratégies actuelles ne tiennent pas compte des inerties inhérentes au système et à son architecture.

Par ailleurs, la régénération du filtre à particules nécessite dans un premier temps une certaine énergie pour être amorcée, puis un apport énergétique constant pour être entretenue dans les meilleures conditions.

Ainsi, les systèmes de contrôle connus, ne permettent pas de garantir la stabilité des conditions de température, qui est requise une fois que la régénération est initiée.

Selon l'état de la technique illustré par la publication DE10033158, cette régulation repose sur une mesure de température faite par un capteur situé à l'entrée du filtre. Or, le catalyseur d'oxydation et la ligne d'échappement en amont du filtre, qui ont une grande inertie thermique, faussent l'information donnée par le capteur de température, de sorte que cette information n'est pas représentative en temps réel, de la situation de roulage.

Par exemple, un levé de pied du conducteur engendre une chute rapide de la température des gaz d'échappement, qui met un certain temps à se répercuter sur la mesure effectuée par le capteur de température. Pendant ce temps, les conditions de régénération sont donc dégradées, voire inadaptées.

Pour remédier à cet inconvénient, l'invention propose de prendre en compte dans la régulation une variable représentative du fonctionnement moteur, dont le temps de réponse est moindre, de manière à réduire la dégradation des conditions de régénération, avant qu'elle ne soit constatée par le capteur de température.

Conformément à l'invention, la régulation de la température en entrée de celui-ci, intègre une correction en fonction d'au moins une variable représentative de la stabilité des conditions de roulage du véhicule.

Plus précisément, la correction est intégrée dans la boucle de régulation de la température en entrée du filtre.

Selon un premier mode de réalisation, la correction est appliquée à la variable d'action de la régulation de la température en entrée du filtre.

Selon un second mode de réalisation, la correction est appliquée directement à la consigne de régulation de la température à l'entrée du filtre.

Le temps pendant lequel les conditions ne sont plus favorables à la régénération est donc réduit, et les dégradations moins importantes, ce qui signifie un gain substantiel sur l'efficacité de la régénération, sur la dilution du gasoil dans l'huile, et sur la consommation de carburant.

L'amélioration de l'efficacité des régénérations permet également d'en réduire la durée. Or la durée des régénérations est un point bloquant dans certaines situations, surtout dans les trajets de type urbain, où les conditions de roulage et de fonctionnement du moteur sont très instables, si bien qu'il est difficile de régénérer avec succès le filtre à particules sur ce type de roulage, étant donné que les périodes pendant lesquelles les conditions sont favorables, sont réduites.

La prise compte des perturbations mesurables, dans la régulation, est également un avantage pour le déclenchement des régénérations sur les roulages hachés, notamment en ville. En effet, la réduction du temps nécessaire à la régénération, ainsi qu'une augmentation de son efficacité, permettent de trouver plus facilement une plage du trajet susceptible de convenir à la régénération, donc d'élargir les conditions de roulage propices au déclenchement de la régénération, notamment sur les trajets de type urbain.

La présente invention sera mieux comprise à la lecture de la description suivante d'un mode de réalisation non limitatif de celle-ci, en se reportant aux dessins annexés, sur lesquels :
- la figure 1 montre l'évolution du temps moyen de régénération d'un filtre à particules en fonction de la température, et

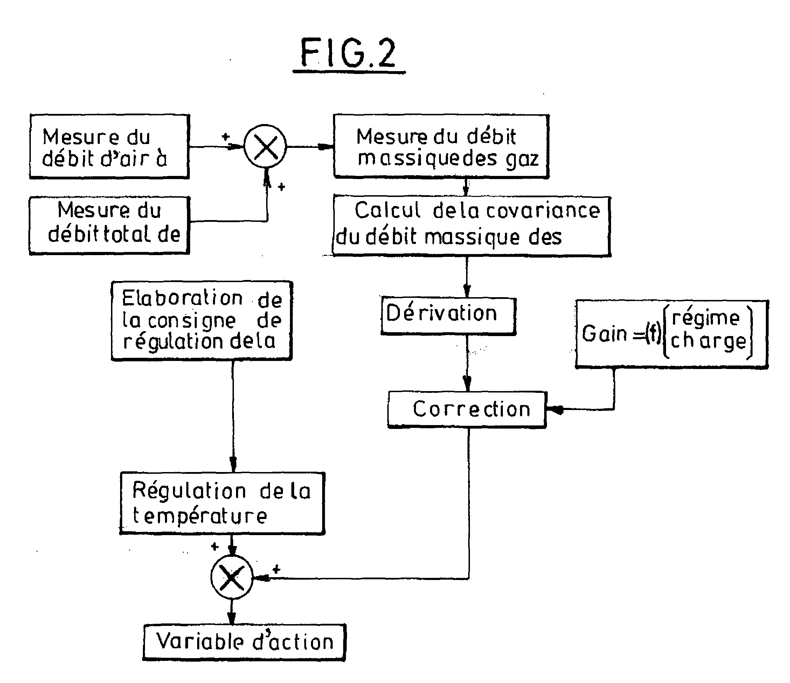

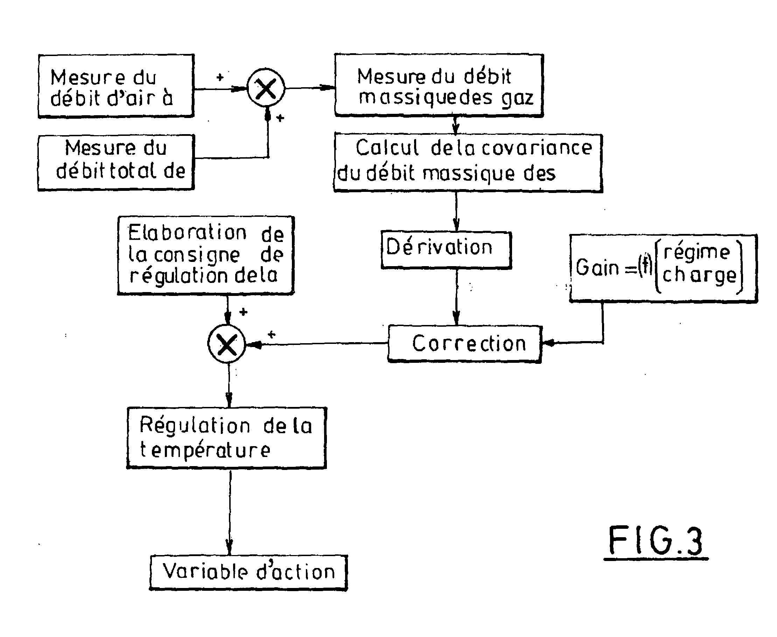

- les figures 2 et 3 illustrent deux modes de réalisations préférés du procédé de contrôle proposé

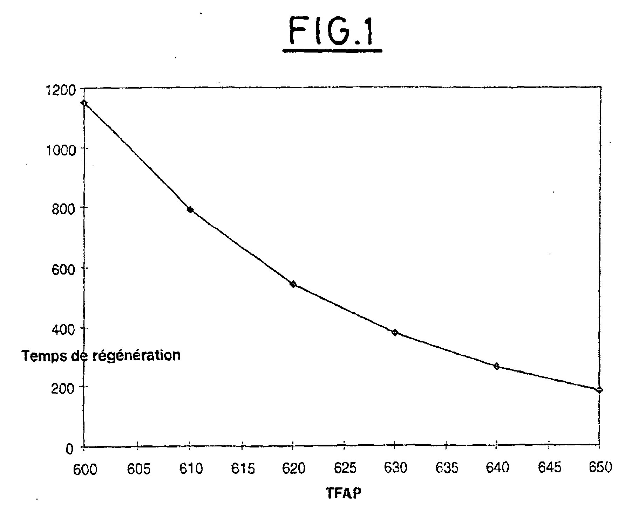

Le graphique de la figure 1 met en évidence le gain en temps de régénération, si on est capable de conserver aux bornes du filtre à particules des conditions de température les plus favorables possibles.

Comme indiqué plus haut, l'optimisation recherchée par l'invention vise notamment à diminuer la durée de la combustion des particules, donc à augmenter leur vitesse de combustion, et à diminuer le coût de la régénération en limitant la dilution du gasoil dans l'huile et la consommation de carburant.

Cette optimisation est mise en oeuvre en intégrant dans la régulation de la température en entrée du filtre une variable ou plusieurs variables, reflétait la stabilité des conditions du roulage. Plusieurs variables, telles que par exemple le couple, la position pédale, le débit d'air, le débit des gaz d'échappement, le régime moteur et la vitesse véhicule, peuvent remplir cet office. Cette ou (ces) variable(s) n'est (ne sont) pas reliée(s) directement aux phénomènes physiques ayant lieu dans le filtre ou à ses bornes, ce qui diffère nettement des stratégies de contrôle connues.

La variable choisie est de préférence une donnée physique en rapport avec le fonctionnement moteur, pour pouvoir rendre compte des variations et des conditions thermiques du roulage, tout en étant indépendante des conditions de chargement et de température du filtre. Pendant la régénération, la boucle de régulation de la température est donc couplée à une variable représentative de la stabilité des conditions fonctionnement du moteur.

Cette variable peut notamment être le débit des gaz d'échappement. Dans ce cas, la correction introduite dans la régulation de la température d'entrée du filtre à particules dépend d'une mesure du débit massique des gaz d'échappement

La mesure peut être effectuée par un débitmètre, qui mesure la quantité d'air rentrant dans le moteur.

La stratégie proposée peut être implantée dans le calculateur du moteur, d'où elle tire les informations nécessaires à son fonctionnement, et renvoie les commandes qu'elle crée vers les différents actionneurs du moteur, mis en jeu.

Ce contrôle nécessite pour sa mise en oeuvre un régulateur de température en entrée du filtre à particules, dont la variable d'action est par exemple, le pilotage de l'injection.

Comme indiqué sur les schémas, une mesure du débit total de gasoil injecté et du débit d'air à l'admission permettent de déterminer le débit massique des gaz d'échappement, utilisable comme variable représentative de l'intensité des variations des conditions de fonctionnement du moteur et des conditions de roulage du véhicule. Cette variable peut être filtrée ou faire l'objet de tout autre traitement numérique, de manière à disposer en temps réel d'un coefficient de variation approprié.

Ce coefficient peut ensuite être dérivé. La dérivée du coefficient de variation est alors affectée d'un « gain » (qui est par exemple une valeur interpolée dans une cartographie de régime et de charge moteur), pour obtenir la valeur de correction qui est introduite dans la boucle de régulation de température.

Grâce au « gain », la correction imposée à la régulation de température est fonction non seulement de l'évolution d'une variable représentative la stabilité du roulage, mais également du régime et de la charge du moteur, tout en étant indépendante des conditions de chargement et de température du filtre à particules.

Par ailleurs, une consigne de régulation de la température est élaborée en, permanence, indépendamment du calcul de la correction.

Conformément à l'invention, l'intégration de la correction dans la boucle de régulation de température, peut intervenir à différents stades, selon la priorité qu'on souhaite donner à cette correction par rapport à la température mesurée en entrée du filtre, et selon l'effet recherché sur la variable d'action ou sur les actionneurs du régulateur.

Conformément à l'invention, on peut intégrer la correction dans la consigne de la régulation de la température en entrée du filtre, ou dans la variable d'action de la régulation de la température en entrée du filtre à particules.

L'application de l'invention suppose plusieurs étapes de mise au point préliminaires. Tout d'abord, il faut déterminer à quel stade de la régulation de la température en entrée du filtre, on choisit d'incorporer la correction, et quels sont les traitements numériques qu'elle doit subir.

Une seconde étape de mise au point consiste à définir la plage de température en entrée du filtre, pour laquelle la correction est effective, et à choisir entre une correction additive ou multiplicative. Cette plage doit notamment tenir compte des caractéristiques du filtre, et du temps de réponse de la régulation, pour garantir l'intégrité du filtre.

Ensuite, il faut définir la valeur du gain, ou de la correction, en fonction de la valeur de stabilité du roulage et de son sens de variation. Comme indiqué plus haut, ce gain peut être déterminé par exemple sur une cartographie en fonction du régime et de la charge du moteur. Il est donc conseillé de définir un seuil de stabilité du roulage au-dessus duquel on applique la correction, et de prendre en compte le sens de variation de la stabilité du broutage, car la correction ne doit pas être la même selon que les conditions de stabilité se dégradent ou s'améliorent, par exemple dans le cas d'un lâché de pied, ou d'une accélération.

Une autre mise au point consiste à définir le champ d'application de la correction, qui est fonction de la température en entrée du filtre : celle-ci ne doit pas être trop élevée car la correction risquerait de générer un emballement de la réaction de combustion des suies et donc à terme la rupture du filtre, et ne doit pas être trop basse, car dans ce cas la correction ne pourrait pas empêcher l'arrêt de la régénération, et pourrait en revanche contribuer à l'augmentation du taux de dilution du gasoil injecté dans l'huile.

L'application du procédé suppose enfin d'avoir déterminé la valeur du coefficient de variation du débit des gaz d'échappement au-delà de laquelle il y aura une correction de la consigne de régulation de la température en entrée du filtre, et d'avoir mis au point la cartographie des gains en fonction de la charge et du régime moteur.

En conclusion, l'intégration d'une nouvelle variable dans la régulation de la température en entrée du filtre à particule pendant les phases de régénération, présente de nombreux avantages. Elle permet tout d'abord de mieux prendre en compte et anticiper les variations des conditions de fonctionnement du moteur.

Par ailleurs, elle ouvre des voies d'amélioration pour le déclenchement et le pilotage de la régénération du filtre à particules. La consigne utilisée pour la régénération reste la température en entrée du filtre, mais l'élaboration de la consigne dépend désormais aussi de cette nouvelle variable.

Grâce à l'invention, la régulation de température tient compte du fonctionnement du filtre et du fonctionnement du moteur. Cette nouvelle dimension permet de rendre la régulation plus dynamique, en réduisant l'inertie due en grande partie à l'inertie thermique du système et au transport d'énergie du cylindre ou du catalyseur d'oxydation vers le filtre à particules.

A partir du moment où la régénération commence, le changement de point de fonctionnement du moteur est pris en compte plus rapidement que si on se fonde uniquement sur le capteur de température en entrée du filtre, ce qui permet de réduire la dégradation de la température en entrée du filtre.

La stabilité de la température augmente le succès de la régénération et sa rapidité, car les chances de rester dans la gamme de températures admissibles pour la régénération sont plus importantes.

Elle augmente aussi la vitesse spécifique de combustion moyenne, et réduit de ce fait la durée de la régénération.

L'optimisation des régénérations et leur raccourcissement diminuent la consommation de carburant durant celles-ci, et réduisent le taux de gasoil dilué dans l'huile. Les compensations thermiques en entrée du filtre (qui dépendent du pilotage de l'injection) sont en effet moins importantes, puisque la dégradation des performances du moteur est décelée plus tôt.

Ainsi, en augmentant l'efficacité des régénérations, on peut utiliser des stratégies d'injection plus ciblées et limiter par voie de conséquence la surconsommation de gasoil, ainsi que sa dilution dans l'huile, pendant les phases de régénération.

## Revendications

1. Procédé de contrôle de la régénération d'un filtre à particules par régulation de la température à l'entrée de celui-ci, **caractérisé en ce que** cette régulation intègre une correction qui est fonction d'au moins une variable représentative de la stabilité des conditions de roulage, et qui dépend d'une mesure du débit massique des gaz d'échappement, déterminée à partir d'une mesure du débit total du gas-oil injecté et du débit d'air à l'admission.

2. Procédé de contrôle selon la revendication 1, **caractérisé en ce que** la correction est intégrée dans la boucle de régulation de la température en entrée du filtre à particules.

3. Procédé de contrôle selon la revendication 1 ou 2, **caractérisé en ce que** la correction est appliquée à la variable d'action de la régulation de la température en entrée du filtre à particules.

4. Procédé de contrôle selon la revendication 1 ou 2, **caractérisé en ce que** la correction est appliquée directement à la consigne de régulation de la température en entrée du filtre à particules.

5. Procédé de contrôle selon l'une des revendications précédentes, **caractérisé en ce que** la variable représentative de la stabilité des conditions de roulage est une donnée physique en rapport avec le fonctionnement du moteur.

6. Procédé de contrôle selon l'une des revendications précédentes, **caractérisé en ce que** la variable représentative de la stabilité des conditions de roulage est indépendante des conditions de chargement et de température du filtre à particules.

7. Procédé de contrôle selon l'une des revendications précédentes, **caractérisé en ce que** la correction est fonction d'un coefficient de variation du débit massique des gaz d'échappement.

8. Procédé de contrôle selon la revendication 7, **caractérisé en ce que** la correction dépend de la dérivée du coefficient de variation du débit massique des gaz d'échappement.

9. Procédé de contrôle selon la revendication 8, **caractérisé en ce que** la correction est égale à la dérivée du coefficient de variation du débit massique des gaz d'échappement affectée d'un gain qui est élaboré à partir d'une cartographie fonction du régime et de la charge du moteur.

## Claims

1. Method for controlling the regeneration of a particulate filter by controlling the inlet temperature thereof, **characterized in that** this control integrates a correction which is a function of at least one variable representing the stability of the driving conditions, and which depends on a measurement of the mass flow rate of the exhaust gases, determined from a measurement of the total flow rate of the diesel injected and the intake air flow rate.

2. Control method according to Claim 1, **characterized in that** the correction is integrated in the temperature control loop at the inlet of the particulate filter.

3. Control method according to either of Claims 1 and 2, **characterized in that** the correction is applied to the temperature control action variable at the inlet of the particulate filter.

4. Control method according to either of Claims 1 and 2, **characterized in that** the correction is applied directly to the temperature control setpoint at the inlet of the particulate filter.

5. Control method according to one of the preceding claims, **characterized in that** the variable representing the stability of the driving conditions is a physical datum related to the operation of the engine.

6. Control method according to one of the preceding claims, **characterized in that** the variable representing the stability of the driving conditions is independent of the loading and temperature conditions of the particulate filter.

7. Control method according to one of the preceding claims, **characterized in that** the correction is a function of a coefficient of variation of the mass flow rate of the exhaust gases.

8. Control method according to Claim 7, **characterized in that** the correction depends on the derivative of the coefficient of variation of the mass flow rate of the exhaust gases.

9. Control method according to Claim 8, **characterized in that** the correction is equal to the derivative of the coefficient of variation of the mass flow rate of the exhaust gases, to which is applied a gain that is prepared from a mapping which is a function of the engine speed and load.

## Patentansprüche

1. Verfahren zur Steuerung der Regeneration eines Partikelfilters durch Regelung der Temperatur an dessen Eingang, **dadurch gekennzeichnet, dass** diese Regelung eine Korrektur einfügt, die eine Funktion mindestens einer Variablen ist, die für die Stabilität der Fahrbedingungen repräsentativ ist, und die von einer Messung des Massendurchsatzes der Abgase abhängt, die ausgehend von einer Messung des Gesamtdurchsatzes des eingespritzten Diesels und des Luftdurchsatzes an der Ansaugseite bestimmt wird.

2. Steuerverfahren nach Anspruch 1, **dadurch gekennzeichnet, dass** die Korrektur in die Regelschleife der Temperatur am Eingang des Partikelfilters integriert ist.

3. Steuerverfahren nach Anspruch 1 oder 2, **dadurch gekennzeichnet, dass** die Korrektur an die Aktionsvariable der Regelung der Temperatur am Eingang des Partikelfilters angewendet wird.

4. Steuerverfahren nach Anspruch 1 oder 2, **dadurch gekennzeichnet, dass** die Korrektur direkt an den Regelsollwert der Temperatur am Eingang des Partikelfilters angewendet wird.

5. Steuerverfahren nach einem der vorhergehenden Ansprüche, **dadurch gekennzeichnet, dass** die für die Stabilität der Fahrbedingungen repräsentative Variable ein physikalischer Datenwert in Verbindung mit dem Betrieb des Motors ist.

6. Steuerverfahren nach einem der vorhergehenden Ansprüche, **dadurch gekennzeichnet, dass** die für die Stabilität der Fahrbedingungen repräsentative Variable unabhängig von den Lade- und Temperaturbedingungen des Partikelfilters ist.

7. Steuerverfahren nach einem der vorhergehenden Ansprüche, **dadurch gekennzeichnet, dass** die Korrektur von einem Variationskoeffizient des Massendurchsatzes der Abgase abhängt.

8. Steuerverfahren nach Anspruch 7, **dadurch gekennzeichnet, dass** die Korrektur von der Ableitung des Variationskoeffizienten des Massendurchsatzes der Abgase abhängt.

9. Steuerverfahren nach Anspruch 8, **dadurch gekennzeichnet, dass** die Korrektur gleich der Ableitung des Variationskoeffizienten des Massendurchsatzes der Abgase ist, der eine Verstärkung zugewiesen wird, die ausgehend von einer Kartographie erarbeitet wird, die von der Drehzahl und der Last des Motors abhängt.
